# EUROPEAN PATENT SPECIFICATION

(11) **EP 1 745 097 B1**
(45) Date of publication and mention of the grant of the patent: **21.04.2010**
(21) Application number: 05805014.7
(22) Date of filing: 11.05.2005
(51) Int. Cl.: C08L 3/02, C08L 29/04

(54) **AN EXTRUSION PROCESS**
STRANGPRESSVERFAHREN
PROCEDE D'EXTRUSION

(30) Priority: 11.05.2004 GB 0410388
(43) Date of publication of application: 24.01.2007
(73) Proprietor: Monosol, LLC, Merrillville, Indiana 46410 (US)
(72) Inventor: WHITCHURCH, Graham John, Garthorpe, Lincolnshire DN17 4RX (GB)
(74) Representative: Johnson, Yvonne Catherine
(86) International application number: PCT/GB2005/050062
(87) International publication number: WO 2006/032929

(56) References cited:
- EP-A- 0 327 505
- EP-A- 0 374 993
- EP-A- 0 408 503
- WO-A-93/09171
- US-A- 5 322 866
- US-A- 5 362 778
- US-A- 5 393 804
- ST-PIERRE N ET AL: "Processing and characterization of thermoplastic starch/polyethylene blends" POLYMER, ELSEVIER SCIENCE PUBLISHERS B.V, GB, vol. 38, no. 3, February 1997 (1997-02), pages 647-655, XP004015338 ISSN: 0032-3861
- GEORGE E R ET AL: "THERMOPLASTIC STARCH BLENDS WITH A POLY(ETHYLENE-CO-VINYL ALCOHOL):PROCESSABILITY AND PHYSICAL PROPERTIES" POLYMER ENGINEERING & SCIENCE, WILEY & SONS, BOGNOR REGIS, GB, vol. 34, no. 1, 15 January 1994 (1994-01-15), pages 17-23, XP000499667 ISSN: 0032-3888

## Description

This invention relates to an extrusion process for making a polymeric object, and to an object so made; in particular it provides a way of making a polymer film.

A wide variety of different polymers are available commercially in the form of pellets. Such pellets can be extruded thermoplastically to form films, and two different techniques are known: the first is referred to as cast extrusion, and the other is blown film extrusion. For example, pellets of PVA (poly vinyl alcohol) can be used to form films of thickness in the range 120-20 µm using blown film extrusion through an annular die. However this is a more expensive polymer than, for example, polyethylene. Starch is also available as pellets, and can be extruded by cast extrusion, making films of thickness down to about 120 µm. Such films are adequate for some purposes, but it has not been found to be possible to form thinner films because starch is not strong enough, and is not sufficiently elastic, being too brittle and too sticky to form thinner films.

US 5 393 804 discloses a biodegradable composition as obtained from a melt comprising converted starch, a plasticizer and at least one member selected from alkenol homopolymers and/or alkenol copolymers which are combined under conditions sufficient to ensure uniform melt formation, in which the at least one member is present in the composition at a concentration of from 10 to 200 parts per 100 parts of dry converted starch.

US 5 362 778 discloses an extrudable polyvinyl alcohol composition useful for packaging and molding applications which is prepared by melt blending polyvinyl alcohol and thermoplastic modified starch to provide a product which has reduced water sensitivity, improved modulus and reduced elongation at high relative humidity.

US 5 322 866 discloses a method of preparing and extruding biodegradable starch blends into biodegradable products in such a way that pre-processing steps, such as gelatinizing or destructurizing of the starch, are not required. Unprocessed raw starch is combined with biodegradable copolymers such as polyvinyl alcohol (PVOH), or ethylene vinyl alcohol (EVOH), a nucleating agent, and a plasticizer.

According to the present invention there is provided a method of forming a polymeric extrusion or moulding wherein pellets of thermoplastically extrudable starch and pellets of thermoplastically extrudable PVA are mixed and then extruded at a temperature in the range 160°C to 190°C to form the extrusion or moulding, and wherein the thermoplastic starch is one that has been prepared using substantially dry starch, with no more than about 5% moisture, processed at an elevated temperature with a swelling agent or plasticiser, such as glycerol or sorbitol, in an extrusion process so that the starch is melted.

The object may be a film or tube produced by blown film extrusion, or alternatively it may be an object formed by injection moulding. The method enables a desired product to be formed that combines starch and PVA, without first requiring the production of mixed pellets.

In a second aspect, the present invention provides (i) a polymeric moulding consisting primarily of thermoplastic starch and PVA, and formed by a method of the first aspect, and which is formed by injection moulding, and (ii) a polymeric extrusion consisting primarily of thermoplastic starch and PVA, and formed by a method of the first aspect.

Preferably the resulting polymer product comprises at least 10% but more preferably at least 25% of starch, and at least 10%, preferably at least 20%, and more preferably at least 25% of PVA (by weight). For example it might comprise equal proportions of starch and PVA, or up to 75% of one component. The composition may also include a plasticiser. For example, the pellets of starch may contain a plasticiser; and/or the pellets of PVA may contain a plasticiser. Preferably the pellets of starch and the pellets of PVA are of substantially the same size, most preferably being of the same dimensions to within about 25%. For example the pellets of starch and the pellets of PVA may each be in the form of squat cylinders of diameter 3 mm and of length 3 mm.

Although starch and PVA are chemically unrelated, and are significantly different in their physical properties, it has surprisingly been found that they form a homogeneous film which appears uniform. (This may be contrasted with the result of extruding a mixture of PVA and polyethylene, which produces an inhomogeneous film which is stringy and web-like.) The film of the invention can be blown to thicknesses down to as thin as 20 µm without loss of uniformity. Desirably the starch and the PVA have substantially the same melt flow index, the range of values of melt flow index differing by no more than about 50%, preferably no more than 25%. The extrusion process preferably utilises a single screw extruder.

Furthermore the resulting film is considerably more readily biodegradable than PVA (which is not biodegradable until dissolved), and it will biodegrade in a composting process. The starch itself is preferably water-soluble, although the composting process only requires humidity for growth of the microorganisms that bring about biodegradation. The resulting film also has the advantage of being considerably cheaper than PVA alone.

Pellets of starch and of PVA are melt blended in a single screw extruder to form a homogenous blend, and then extruded. Clearly the pellets may be mixed before being fed into the extruder, or may be fed separately into the extruder and mixed in it. It is consequently very straightforward to adjust the proportions of the two components, PVA and starch, by merely adjusting the numbers of pellets of each. The term "melt" as used herein includes, but is not limited to, merely softening the polymers sufficiently for extrusion. The melting point of starch is about 120-130°C and that of PVA is about 180-220°C, depending on grade; the extrusion process preferably is carried out at temperatures in the range about 160° to 185°C (depending on the grade of PVA), that is to say at temperatures above the melting point of starch but below that of the PVA.

Blown film extrusion is well known as a process for making plastic bags and plastic sheets. Typically, a tube of molten plastic is extruded from an annular die, and then stretched and expanded to a larger diameter and a reduced radial thickness by internal air pressure and tension from rollers. The hot tube is cooled by ambient air. Ambient air is also used to provide the internal air pressure within the tube, and so to control the size and thickness of the film tube. There may thus be a flow of air over only the external surface, or over both the external and internal surfaces of the tube in order to obtain the required degree of cooling. Careful control of the air pressure within the tube enables the final diameter of the tube to be controlled, as well as the film thickness.

The term "starch" in this specification refers to carbohydrates of natural, vegetable origin, composed mainly of amylose and/or amylopectin. A variety of plants may be used as a source of starch, for example potatoes, corn or tapioca. The thermoplastic starch is one that has been prepared using substantially dry starch, with no more than about 5% moisture, processed with a swelling agent or plasticiser such as glycerol or sorbitol in an extrusion process at an elevated temperature (for example between 120° and 220°C) so that the starch is melted. The resulting thermoplastic starch is substantially free of crystalline fractions, and its properties do not significantly change on storage. A suitable material is manufactured for example by Biotec Biologische Naturverpackungen GmbH & Co KG, and the preparation method is described in US 6 472 497. It will be appreciated that the starch pellets will therefore typically contain a plasticiser, and may contain other biodegradable polymers; the process has not been found to work when using starch pellets that also contain poly lactic acid.

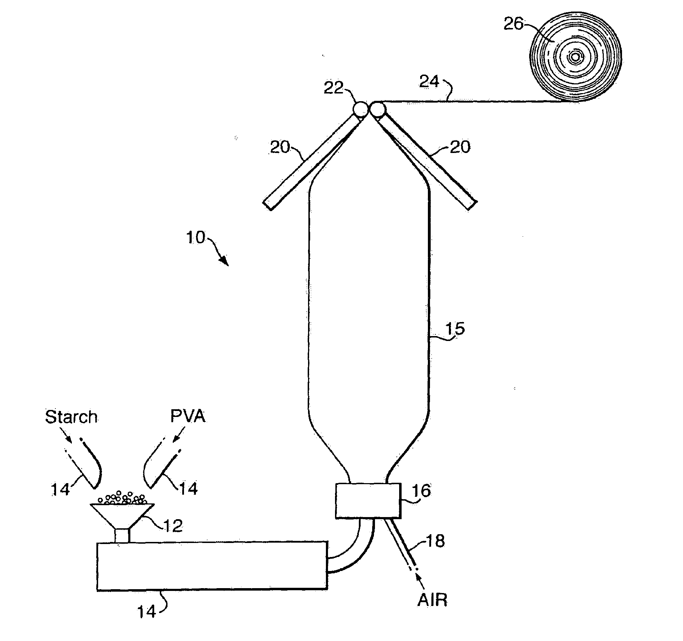

The invention will now be further and more particularly described, by way of example only, and with reference to the accompanying drawing, which shows diagrammatically a side view of a blown film extrusion apparatus.

Referring now to the drawing, a conventional blown film extrusion apparatus 10 incorporates a hopper 12 to which pellets of thermoplastic starch (for example Bioplast TPS) and pellets of PVA are supplied through chutes 13. The pellets are typically of diameter in the range 2-3 mm and of length in the range 2-4 mm. By way of example the pellets of each component preferably have a melt flow index (at 210°C and a load of 2.16 kg) in the range 0.45 to 1.6 g/10 min. The mixture of pellets in the hopper 12 is fed into a single-screw extruder 14 which mixes and heats the polymers, and the resulting molten mixture is supplied to an annular die 16. It emerges as a polymer tube 15. Compressed air is fed into the inside of the tube from a duct 18, so the tube 15 increases in diameter, typically the diameter increase being in the range 2.5 to 4.5 times. As the tube 15 cools, its physical dimensions become set (at what may be referred to as the "frost point"). The tube 15 is then guided by angled guides 20 to a pair of nip rollers 22 which flatten the tube so as to form two flat films 24; the nip rollers 22 pull the tube 15 at a faster rate than it is extruded through the die 16, so the tube 15 is stretched longitudinally (as well as being stretched transversely by the air pressure). The films 24 can then be fed onto a storage roller 26. Such apparatus 10 is known, and for example is described in US 3 959 425 and in US 4 820 471, at least as regards forming films from polyethylene.

The present invention thus enables biodegradable, water-soluble or water-dispersible films to be made at a relatively low cost, and with good physical properties. This is evident from the measured properties of the resulting films as shown in table 1, in which measurements made on a conventional PVA film are compared to those made from a mixture of PVA and starch containing 50% of each component; in this case the PVA is a grade which would be soluble in cold water at say 10°C. The two films of the invention were of nominal thicknesses 25 and 75 µm. The mechanical properties (of dry film) are tabulated in both the machine direction (MD), which is the longitudinal direction of the extrusion, and in the transverse direction (TD). The disintegration and dissolution times are the times taken for the films to disintegrate or dissolve in water at 10°C.

**Table 1**

| | PVA | PVA/starch | PVA/starch |
|---|---|---|---|
| Gauge/µm | 30.0 | 23.9 | 69.0 |
| Maximum stress (MD)/MPa | 50 | 14.61 | 14.80 |
| Maximum stress (TD)/MPa | 35 | 13.10 | 14.27 |
| Extension at break (MD)/% | 200 | 307 | 363 |
| Extension at break (TD)/% | 350 | 308 | 363 |
| Elastic modulus (MD)/MPa | 30 | 4.4 | 3.4 |
| Elastic modulus (TD)/MPa | 5 | 3.6 | 3.3 |
| Disintegration time/s | 1 | 1 | 14 |
| Dissolution time/s | 45 | 128 | 420 |

Referring now to table 2, measurements are shown for films of a conventional PVA film and those made from mixtures of PVA and starch; in this case the PVA is a grade which would be soluble in warm water at say 60°C. It should be noted that the films of the invention were of different thicknesses. The mechanical properties (of dry film) are tabulated in both the machine direction (MD), which is the longitudinal direction of the extrusion, and in the transverse direction (TD). The disintegration and dissolution times are the times taken for the films to disintegrate or dissolve in water at 63°C.

**Table 2**

| | PVA | PVA/50% starch | PVA/25% starch | PVA/33% starch |
|---|---|---|---|---|
| Gauge/µm | 25.6 | 18.9 | 50.8 | 24.9 |
| Maximum stress (MD) /MPa | 74.40 | 30.96 | 40.00 | 44.35 |
| Maximum stress (TD)/MPa | 50.60 | 29.60 | 35.73 | 46.92 |
| Extension at break (MD) /% | 169 | 130 | 222 | 166 |
| Extension at break (TD)/% | 304 | 219 | 274 | 261 |
| Elastic Modulus (MD)/MPa | 121 | 50 | 50 | 61 |
| Elastic modulus (TD) /MPa | 49 | 22 | 32 | 27 |
| Disintegration time/s | 1.33 | 1 | 2.66 | 2 |
| Dissolution time/s | 38.7 | 127 | 302 | 152 |

## Claims

1. A method of forming a polymeric extrusion or moulding wherein pellets of thermoplastically extrudable starch and pellets of thermoplastically extrudable PVA are mixed and then extruded at a temperature in the range 160°C to 190°C to form the extrusion or moulding, and wherein.the thermoplastic starch is one that has been prepared using substantially dry starch, with no more than about 5% moisture, processed at an elevated temperature with a swelling agent or plasticiser such as glycerol or sorbitol in an extrusion process so that the starch is melted.

2. A method as claimed in claim 1 wherein the said pellets are mixed and extruded, using a single screw extruder.

3. A method as claimed in claim 1 or claim 2 wherein the proportions of starch and PVA that are mixed are at least 10% of starch and at least 10% of PVA by weight.

4. A method as claimed in any one of the preceding claims wherein the pellets of starch and the pellets of PVA are of substantially the same size, most preferably being of the same dimensions to within about 25%.

5. A polymeric moulding consisting primarily of thermoplastic starch and PVA, and formed by a method as claimed in any one of the preceding claims, and which is formed by injection moulding.

6. A polymeric extrusion consisting primarily of thermoplastic starch and PVA, and formed by a method as claimed in any one of claims 1 to 4.

7. A polymeric extrusion as claimed in claim 6 which is a film.

8. A film as claimed in claim 7 which is less than 50 µm thick.

## Patentansprüche

1. Verfahren zur Bildung eines polymeren Extrudats oder Formkörpers, wobei Pellets aus thermoplastisch extrudierbarer Stärke und Pellets aus thermoplastisch extrudierbarem PVA gemischt und anschließend bei einer Temperatur im Bereich von 160°C bis 190°C extrudiert werden, um das Extrudat oder den Formkörper zu bilden, und wobei die thermoplastische Stärke eine solche ist, die unter Verwendung von im Wesentlichen trockener Stärke mit nicht mehr als etwa 5% Feuchtigkeit hergestellt und bei höherer Temperatur mit einem Quellmittel oder Weichmacher wie z.B. Glycerin oder Sorbit in einem Extrusionsverfahren verarbeitet wird, so dass die Stärke geschmolzen wird.

2. Verfahren nach Anspruch 1, wobei die Pellets unter Einsatz eines Einschneckenextruders gemischt und extrudiert werden.

3. Verfahren nach Anspruch 1 oder 2, wobei die Anteile an Stärke und PVA, die gemischt werden, wenigstens 10 Gew.-% Stärke und wenigstens 10 Gew.-% PVA betragen.

4. Verfahren nach einem der vorstehenden Ansprüche, wobei die Stärke-Pellets und PVA-Pellets im Wesentlichen die gleiche Größe haben und besonders bevorzugt die gleichen Abmessungen innerhalb etwa 25% aufweisen.

5. Polymerer Formkörper, der hauptsächlich aus thermoplastischer Stärke und thermoplastischem PVA besteht und mit Hilfe eines Verfahrens nach einem der vorstehenden Ansprüche gebildet wird und durch Spritzgießen gebildet wird.

6. Polymeres Extrudat, das hauptsächlich aus thermoplastischer Stärke und thermoplastischem PVA besteht und mit Hilfe eines Verfahrens nach einem der Ansprüche 1 bis 4 gebildet wird.

7. Polymeres Extrudat nach Anspruch 6, bei dem es sich um eine Folie handelt.

8. Folie nach Anspruch 7, die weniger als 50 µm dick ist.

## Revendications

1. Procédé de formation d'un polymère extrudé ou moulé, dans lequel des pastilles d'amidon thermoplastiquement extrudable et des pastilles de PVA thermoplastiquement extrudable sont mélangées et ensuite extrudées à une température dans la plage de 160°C à 190°C pour former l'extrusion ou le moulage, et dans lequel l'amidon thermoplastique est un amidon qui a été préparé à l'aide d'amidon sensiblement sec, avec pas plus d'environ 5 % d'humidité, traité à une température élevée avec un agent gonflant ou un plastifiant tel que le glycérol ou le sorbitol dans un processus d'extrusion de sorte que l'amidon est fondu.

2. Procédé selon la revendication 1, dans lequel lesdites pastilles sont mélangées et extrudées à l'aide d'une extrudeuse monovis.

3. Procédé selon la revendication 1 ou la revendication 2, dans lequel les proportions d'amidon et de PVA qui sont mélangées sont d'au moins 10 % d'amidon et d'au moins 10 % de PVA en poids.

4. Procédé selon l'une quelconque des revendications précédentes, dans lequel les pastilles d'amidon et les pastilles de PVA ont sensiblement la même taille, le plus préférablement les mêmes dimensions jusqu'à environ 25 %.

5. Polymère moulé se composant principalement d'amidon et de PVA thermoplastiques, et formé au moyen d'un procédé selon l'une quelconque des revendications précédentes, et qui est formé par moulage par injection.

6. Polymère extrudé se composant principalement d'amidon et de PVA thermoplastiques, et formé au moyen d'un procédé selon l'une quelconque des revendications 1 à 4.

7. Polymère extrudé selon la revendication 6, qui est un film.

8. Film selon la revendication 7, qui a une épaisseur inférieure à 50 µm.
